# EUROPÄISCHE PATENTANMELDUNG

(11) **EP 1 876 364 A2**
(43) Veröffentlichungstag der Anmeldung: **09.01.2008**
(21) Anmeldenummer: 07108210.1
(22) Anmeldetag: 15.05.2007
(51) Int. Cl.: F16C 13/00, D21G 1/02

(54) **Biegeausgleichswalze und Verfahren zum Betreiben einer Biegeausgleichswalze**

(30) Priorität: 04.07.2006 DE 102006030717
(71) Anmelder: Voith Patent GmbH, 89522 Heidenheim (DE)
(72) Erfinder: Dr. van Haag, Rolf, 47647, Kerken (DE)
(74) Vertreter: Kunze, Klaus

(57) **Zusammenfassung**

Es wird eine Biegeausgleichswalze (1) angegeben mit einem umlaufenden Walzenmantel (2) und einem Träger (4), auf dem der Walzenmantel (2) mit mindestens einem Stützelement (3) abgestützt ist, das vom Druck in einem Druckraum (20) beaufschlagt ist, der über eine Drosselanordnung (15) mit einer Versorgungsleitung (11) in Verbindung steht und von der Drosselanordnung (15) einerseits und dem Stützelement (3) andererseits begrenzt ist.

Man möchte eine gute Schwingungsdämpfung bewirken können.

Hierzu ist vorgesehen, daß die Drosselanordnung (15) gegenüber dem Träger (4) bewegbar ist, wobei eine Halteeinrichtung (8, 31) vorgesehen ist, mit der die Drosselanordnung (15) im Träger (4) festlegbar ist.

## Beschreibung

Die Erfindung betrifft eine Biegeausgleichswalze mit einem umlaufenden Walzenmantel und einem Träger, auf dem der Walzenmantel mit mindestens einem Stützelement abgestützt ist, das vom Druck in einem Druckraum beaufschlagt ist, der über eine Drosselanordnung mit einer Versorgungsleitung in Verbindung steht und von der Drosselanordnung einerseits und dem Stützelement andererseits begrenzt ist.

Ferner betrifft die Erfindung ein Verfahren zum Betreiben einer Biegeausgleichswalze mit einem umlaufenden Walzenmantel und einem Träger, bei dem man mindestens ein Stützelement durch eine Drosselanordnung hindurch mit einem Druck beaufschlagt und damit den Walzenmantel gegenüber dem Träger abstützt.

Eine Biegeausgleichswalze und ein Verfahren zu ihrem Betrieb sind aus DE 38 02 234 A1 bekannt. Das Stützelement wird im Betrieb unter einem gewissen Druck von innen gegen den Walzenmantel gedrückt und stützt ihn dadurch ab. Die Berührungsfläche zwischen dem Walzenmantel und dem Stützelement wird im bekannten Fall hydrostatisch geschmiert. Die hierzu erforderliche Hydraulikflüssigkeit stammt aus dem Druckraum, in dem der Druck erzeugt wird, der das Stützelement trägt. Im Betrieb neigt der Walzenmantel gelegentlich zu Schwingungen, die sich in einer entsprechenden Bewegung des Stützelements niederschlagen. Bei dieser Bewegung des Stützelements wird Hydraulikflüssigkeit durch die Drosselanordnung hindurchgetrieben, also hin- und hergeschoben. Durch die in der Drosselanordnung entstehende Reibung soll dem System Schwingungsenergie entzogen werden.

Allerdings hat sich herausgestellt, daß die Schwingungsdämpfung insbesondere bei höheren Frequenzen den Erwartungen nicht entspricht.

Der Erfindung liegt die Aufgabe zugrunde, eine gute Schwingungsdämpfung zu bewirken.

Diese Aufgabe wird bei einer Biegeausgleichswalze der eingangs genannten Art dadurch gelöst, daß die Drosselanordnung gegenüber dem Träger bewegbar ist, wobei eine Halteeinrichtung vorgesehen ist, mit der die Drosselanordnung im Träger festlegbar ist.

Dabei geht man von folgender Überlegung aus, wobei vereinfachend angenommen wird, daß als Hydraulikflüssigkeit Öl verwendet wird. Das zwischen dem Träger und dem Stützelement eingespannte Ölvolumen stellt physikalisch eine Kombination aus einer Feder, einer Masse und einem Dämpfer dar. Die Steifigkeit der Feder ergibt sich dabei durch die Kompressibilität des eingespannten Ölvolumens. Wenn also das Stützelement durch den Mantel zu Schwingungen angeregt wird, dann kann dies bei einer entsprechenden Kompressibilität des Ölvolumens dazu führen, daß zu wenig Öl durch die Drosselanordnung verdrängt wird. Die Federsteifigkeit hängt u.a. von dem Volumen des eingespannten Öls ab. Wenn man nun in der Lage ist, die Drosselanordnung dem Stützelement nachzufahren, dann kann man das Ölvolumen, auf dem das Stützelement abgestützt ist, verkleinern. Wenn das Ölvolumen klein genug ist, dann wird bei einer Schwingung des Stützelements immer ausreichend Öl durch die Drosselanordnung hin- und herbewegt, so daß das Dämpfungsverhalten verbessert wird. Dadurch, daß man die Drosselanordnung gegenüber dem Träger bewegbar macht, kann man das Ölvolumen auch dort minimieren, wo der Träger eine relativ große Durchbiegung aufweist und dementsprechend das Stützelement relativ weit herausgefahren werden muß. Man kann daher beim Druckaufbau die Drosselanordnung dem Stützelement nachführen. Wenn die Drosselanordnung dann eine Position erreicht hat, wo sie gemeinsam mit dem Stützelement ein Ölvolumen begrenzt, das klein genug ist, dann wird die Drosselanordnung gegenüber dem Träger festgelegt, so daß das kleine Ölvolumen im Betrieb erhalten wird.

Vorzugsweise ist die Drosselanordnung in einem Zubringerelement angeordnet, das im Träger geführt ist. Die Verwendung eines Zubringerelements ermöglicht es, die Drosselanordnung dem Stützelement nachzufahren und dabei das zwischen dem Stützelement und der Drosselanordnung eingeschlossene Ölvolumen zu minimieren oder zumindest klein zu halten. Man kann die Drosselanordnung dann auch außerhalb des Trägers positionieren, wobei die Führung des Zubringerelements im Träger dafür sorgt, daß die Drosselanordnung und der Träger in einer bestimmten Lage zueinander festgelegt werden können.

Vorzugsweise bildet das Zubringerelement eine Führung für das Stützelement. Das Stützelement kann also auf oder in dem Zubringerelement in radialer Richtung hin- und herbewegt werden, beispielsweise dann, wenn Schwingungen auf den Walzenmantel wirken, die sich auf das Stützelement übertragen. In diesem Fall bildet das Zubringerelement die Führung in radialer Richtung für das Stützelement.

Vorzugsweise ist das Zubringerelement als Rohr ausgebildet, das mit einer den Querschnitt des Rohres verschließenden Wand versehen ist, in der die Drosselanordnung angeordnet ist. Ein Rohr, insbesondere ein Zylinderrohr, läßt sich leicht im Träger führen. Hierzu ist lediglich eine entsprechende Bohrung im Träger notwendig, die aber bislang auch schon für die Führung des Stützelements vorhanden war. Auch kann man das Rohr in vorteilhafter Weise für die Führung des Stützelements verwenden, so daß man durch die Zwischenschaltung des Zubringerelements zwischen dem Träger und dem Stützelement im Grunde keine größeren konstruktiven Änderungen an der Biegeausgleichswalze insgesamt durchführen muß. Gleichwohl ist es möglich, die Drosselanordnung dem Stützelement nachzufahren und dann so gegenüber dem Träger zu fixieren, daß das zwischen Stützelement und Drosselanordnung eingeschlossene Ölvolumen klein ist.

Vorzugsweise ist zwischen dem Zubringerelement und dem Stützelement eine Federanordnung angeordnet. Dies erleichtert es, den Raum zwischen dem Stützelement und der Drosselanordnung, in dem das das Stützelement tragende Ölvolumen eingeschlossen ist, zu minimieren. Darüber hinaus wird eine Hartlage des Stützelements an dem Zubringerelement vermieden. Wenn das Stützelement keinen Kontakt zum Walzenmantel hat, dann ist die Feder der Federanordnung ungespannt oder nur leicht vorgespannt. Sobald das Stützelement Kontakt zum Walzenmantel hat, baut sich der Öldruck in den Öltaschen des Stützelements auf und der Öldruck unter dem Zubringerelement steigt an. In Abhängigkeit von den Verhältnissen der Flächen, auf die der Öldruck auf das Stützelement bzw. auf das Zubringerelement wirkt, ergibt sich eine Differenzkraft, die durch die Federanordnung aufgenommen wird. Durch den sich einstellenden Federweg verschiebt sich das Zubringerelement relativ zum Stützelement. Nachdem der Druckaufbau abgeschlossen ist, wird das Zubringerelement im Träger fixiert. Somit ist gewährleistet, daß im Falle einer relativen Schwingungsbewegung zwischen dem Walzenmantel und dem Träger das verdrängte Ölvolumen über die Drosselanordnung hin- und hergeschoben wird. Da die Federanordnung im Verhältnis zur übertragenen hydraulischen Kraft des Stützelements relativ weich ist, wird die Dämpfungseigenschaft des Stützelements dadurch nicht merklich negativ beeinflußt.

Vorzugsweise weist die Federanordnung mindestens eine Ausfahrfeder auf, die einer Bewegung des Zubringerelements gegen das am Walzenmantel anliegende Stützelement entgegenwirkt. Die Ausfahrfeder sichert in erster Linie dagegen, daß das Zubringerelement und das Stützelement in Hartlage zueinander kommen, wenn das Zubringerelement durch den Öldruck radial so weit wie möglich nach außen gefahren wird. Darüber hinaus sichert die Ausfahrfeder, wie oben bereits kurz erläutert, daß das eingeschlossene Ölvolumen minimiert werden kann, ohne daß weitere, aufwendige Steuermaßnahmen getroffen werden müssen.

Auch ist von Vorteil, wenn die Federanordnung mindestens eine Einfahrfeder aufweist, deren Wirkung einer Bewegung des Zubringerelements in Richtung auf den Träger entgegengesetzt gerichtet ist. Mit der Einfahrfeder ist gewährleistet, daß auch bei geringen Drücken kein direkter harter Kontakt zwischen dem Stützelement und dem Zubringerelement besteht. Das Stützelement kann somit zwischen relativ weichen Federn verspannt werden. Die verspannten Federn dienen dann hauptsächlich dazu, die bewegungsabhängigen Reibungskräfte der Dichtungen zwischen dem Stützelement und dem Zubringerelement aufzunehmen, ohne daß eine Hartlage zwischen dem Stützelement und dem Zubringerelement entstehen kann.

Vorzugsweise weist die Federanordnung mindestens eine Tellerfeder auf. Eine Tellerfeder hat ein relativ geringes Volumen, so daß in entsprechender Weise das eingeschlossene Ölvolumen zwischen dem Stützelement und der Drosselanordnung klein gehalten werden kann.

Vorzugsweise ist zwischen dem Zubringerelement und dem Stützelement eine gewölbte Anschlagflächenanordnung vorgesehen. Dies ist insbesondere dann günstig, wenn zwischen dem Stützelement und dem Zubringerelement keine Feder angeordnet ist. In diesem Fall kann man auch dann, wenn Stützelement und Zubringerelement in Hartlage aneinander anliegen, dafür sorgen, daß eine gewisse Kippbewegung des Stützelements gegenüber dem Zubringerelement möglich ist.

Hierbei ist bevorzugt, daß das Zubringerelement einen Anschlagflächeneinsatz aufweist. In diesem Fall muß man nicht das gesamte Zubringerelement bearbeiten, um die gewölbte Anschlagflächenanordnung, die vorzugsweise die Form eines Abschnitts einer Kugeloberfläche aufweist, zu bearbeiten.

Auch ist von Vorteil, wenn zwischen dem Zubringerelement und dem Anschlagflächeneinsatz ein Drosselspalt ausgebildet ist. In diesem Fall muß man die Drosselanordnung nicht durch eine Bearbeitung des Zubringerelements erzeugen. Die Drosselanordnung ergibt sich vielmehr dadurch, daß der Anschlagflächeneinsatz in das Zubringerelement eingesetzt wird. Dies läßt sich in vielen Fällen einfach dadurch erreichen, daß der Anschlagflächeneinsatz in Umfangsrichtung verteilt einige Arme aufweist, die auf eine entsprechende Stützfläche im Zubringerelement aufgelegt werden. Durch den verbleibenden Spalt läßt sich dann die gewünschte Drosselwirkung erzielen.

Auch ist bevorzugt, wenn die Halteeinrichtung als Klemmeinrichtung ausgebildet ist. In diesem Fall kann man die Drosselanordnung praktisch in jeder Position gegenüber dem Träger festhalten, so daß das Ölvolumen zwischen der Drosselanordnung und dem Stützelement praktisch stufenlos eingestellt werden kann.

Hierbei ist bevorzugt, daß die Klemmeinrichtung hydraulisch betätigbar ist. Hydraulischer Druck steht in einer derartigen Biegeeinstellwalze ohnehin zur Verfügung. Mit einem hydraulischen Druck lassen sich ausreichend große Klemmkräfte erzeugen.

Vorzugsweise weist die Klemmeinrichtung eine das Zubringerelement umgebende Hülse auf, deren Umfang einen Öldruckkanal begrenzt. Wenn der Öldruckkanal unter einen ausreichenden Druck gesetzt wird, dann verformt dieser Druck die Hülse radial nach innen, so daß das Zubringerelement festgeklemmt wird.

Vorzugsweise weist das Stützelement mindestens eine Drucktasche auf, deren Flüssigkeitsversorgung von der Versorgungsleitung getrennt ist. Damit ist es möglich, für die Ölversorgung der Drucktasche und für die Versorgung des Ölvolumens zwischen dem Stützelement und der Drosselanordnung unterschiedliche Qualitäten von Ölen zu verwenden. Beispielsweise kann man das Öl, das zwischen der Drosselanordnung und dem Stützelement eingeschlossen ist, praktisch luftfrei halten oder dort einen wesentlich geringeren Luftanteil einstellen als in dem Öl, das zur Schmierung des Bereichs zwischen dem Stützelement und dem Walzenmantel verwendet wird. Dieses Öl gelangt letztendlich in das Innere des Walzenmantels und wird von dort wieder abtransportiert. Dabei ist es praktisch unvermeidlich, daß etwas Luft in das Öl gelangt. Je mehr Luft im Öl enthalten ist, desto höher ist die Kompressibilität dieses Öles. Wenn man das Ölvolumen zwischen dem Stützelement und der Drosselanordnung luftfrei oder luftarm halten kann, dann wird hier die Federhärte vergrößert und die Dämpfungseigenschaften werden verbessert.

Vorzugsweise weist das Stützelement mindestens eine Drucktasche auf, deren Volumen durch eine Piezoelementanordnung veränderbar ist. Mit der Piezoelementanordnung läßt sich ein zusätzlicher Beitrag zur Schwingungsdämpfung am Walzenmantel leisten.

Vorzugsweise weist das Stützelement mindestens eine Drucktasche auf, die über eine Drosseleinrichtung mit einem Druckspeicher in Verbindung steht. Auch der Druckspeicher ist eine zusätzliche Möglichkeit, um eine verbesserte Dämpfung zu bewirken. An dieser Dämpfung ist allerdings, genau wie bei der Dämpfung durch die Piezoelementanordnung, nur das Öl zwischen dem Stützelement und dem Walzenmantel beteiligt.

Die Aufgabe wird bei einem Verfahren der eingangs genannten Art dadurch gelöst, daß man die Drosselanordnung gegenüber dem Träger verlagert und in einer Halteposition festhält.

Wie oben im Zusammenhang mit der Biegeausgleichswalze erläutert, ist es auf diese Weise möglich, das zwischen dem Stützelement und der Drosselanordnung eingeschlossene Ölvolumen zu minimieren. Je kleiner dieses Ölvolumen ist, desto größer ist die Federsteifigkeit dieses Ölvolumens. Je steifer dieses Ölvolumen ist, desto besser ist die Dämpfungswirkung der Drosselanordnung, weil sichergestellt werden kann, daß bei einer Schwingungsbewegung des Stützelements immer eine ausreichende Menge an Öl durch die Drossel der Drosselanordnung geleitet werden kann.

Vorzugsweise verlagert man bei einem Walzenanlauf die Drosselanordnung gemeinsam mit dem Stützelement. Man verwendet also die gleiche Hydraulikflüssigkeit, mit der man das Stützelement letztendlich gegen die Innenseite des Walzenmantels fährt, dazu, auch die Drosselanordnung zu verlagern. Sobald die Drosselanordnung die Halteposition erreicht hat, wird sie festgehalten, so daß eine weitere Druckerhöhung nicht mehr zu einer Verlagerung der Drosselanordnung führt, sondern lediglich zu einer Verlagerung des Stützelements bzw. zu einer Abstützung des Stützelements. Die Haltepositionen können für unterschiedliche Stützelemente durchaus unterschiedlich sein. Beispielsweise wird man bei einem Stützelement, das in der axialen Mitte des Trägers angeordnet ist, die Drosselanordnung weiter aus dem Träger herausfahren müssen als bei einem Stützelement, das im Randbereich des Walzenmantels angeordnet ist.

Vorzugsweise erhöht man nach dem Festhalten der Drosselanordnung den auf das Stützelement wirkenden Druck weiter. Beispielsweise kann man bei einem Walzenanlauf, also dann, wenn man die Stützelemente von innen gegen den Walzenmantel fährt und mit Druck beaufschlagt, einen bestimmten Anteil des Betriebsdrucks, beispielsweise 80 %, einstellen, so daß die Drosselanordnung gemeinsam mit dem Stützelement so weit ausgefahren wird, wie es diesem Druck entspricht. Danach wird die Drosselanordnung festgehalten. Der Druck wird weiter erhöht, beispielsweise auf 100 % des Betriebsdrucks. Dadurch kommt das Stützelement von der Drosselanordnung frei und kann dann im weiteren Betrieb schwingen, ohne daß es mit der Drosselanordnung in Konflikt kommt.

Die Erfindung wird im folgenden anhand von bevorzugten Ausführungsbeispielen in Verbindung mit der Zeichnung beschrieben. Hierin zeigen:
- Fig. 1: eine erste Ausgestaltung einer Biegeausgleichswalze im Schnitt,
- Fig. 2: eine zweite Ausgestaltung der Biegeausgleichswalze,
- Fig. 3: eine dritte Ausgestaltung der Biegeausgleichswalze,

- Fig. 4: eine vierte Ausgestaltung der Biegeausgleichswalze,
- Fig. 5: eine fünfte Ausgestaltung der Biegeausgleichswalze,
- Fig. 6: eine sechste Ausgestaltung der Biegeausgleichswalze,
- Fig. 7: eine siebte Ausgestaltung der Biegeausgleichswalze und
- Fig. 8: eine achte Ausgestaltung der Biegeausgleichswalze.

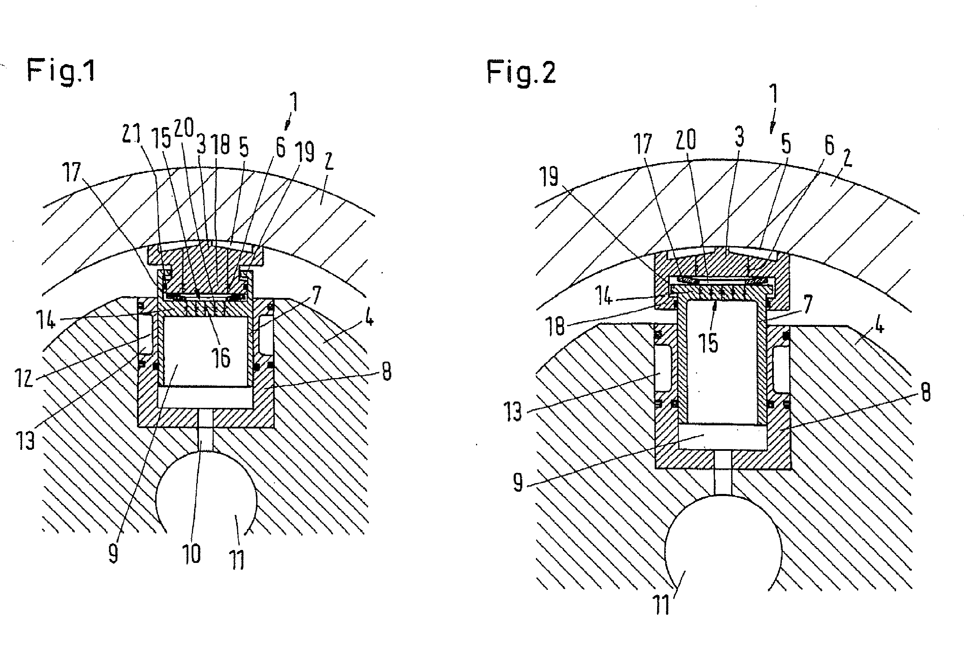

Fig. 1 zeigt eine erste Ausführungsform einer Biegeausgleichswalze 1 mit einem im Betrieb umlaufenden Walzenmantel 2, der über ein Stützelement 3 auf einem den Walzenmantel 2 durchsetzenden Träger 4 abgestützt ist. Der Träger 4 wird gelegentlich auch als "Joch" bezeichnet.

Das Stützelement 3 weist in an sich bekannter Weise mehrere Drucktaschen 5 auf, die über Taschendrosseln 6 mit Hydraulikflüssigkeit, in der Regel einem Öl, unter Druck versorgt werden. Dieses Öl fließt dann über den Rand der Drucktaschen 5 ab und bildet einen Schmierfilm zwischen dem Stützelement 3 und dem Walzenmantel 2. Der Walzenmantel 2 wird in diesem Fall hydrostatisch abgestützt.

Das Stützelement 3 ist in einem Zubringerelement 7 geführt. Das Zubringerelement 7 ist als Rohrabschnitt oder Buchse ausgebildet. Das Zubringerelement 7 ist seinerseits in einer Hülse 8 geführt, die im Träger 4 angeordnet ist. Das Zubringerelement 7 und die Hülse 8 umgrenzen einen Raum 9, der über eine Leitung 10 mit einer den Träger der Länge nach durchsetzenden Versorgungsleitung 11 in Verbindung steht.

Die Hülse 8 ist in ihrer Umfangsfläche mit einer Nut 12 versehen, die zusammen mit dem Träger 4 einen Öldruckkanal 13 begrenzt, der durch eine nicht näher dargestellte Steuereinrichtung unter Druck gesetzt werden kann. Wenn der Öldruckkanal 13 mit einem entsprechenden Druck beaufschlagt worden ist, dann wird die Hülse 8 in Richtung auf das Zubringerelement 7 so weit verformt, daß das Zubringerelement 7 in der Hülse 8 festgeklemmt ist. Wenn der Druck im Öldruckkanal 13 weit genug abgesenkt wird, dann kommt das Zubringerelement 7 von der Hülse 8 frei und kann gegenüber dem Träger 4 bewegt werden.

Das Zubringerelement 7 weist eine Wand 14 auf, die sich über den gesamten Querschnitt des Zubringerelements 7 erstreckt. Die Wand 14 weist eine Drosselanordnung 15 auf, die im vorliegenden Ausführungsbeispiel aus einer Vielzahl von einzelnen Drosseln 16 gebildet ist.

Zwischen dem Zubringerelement 7, genauer gesagt dessen Wand 14, und dem Stützelement 3 ist eine Tellerfeder 17 angeordnet, die komprimiert wird, wenn das Zubringerelement 7 und das Stützelement 3 aufeinander zu bewegt werden.

Das Stützelement 3 ist mit einem Stützelementfuß 18 in das Zubringerelement 7 eingesetzt. Das Zubringerelement 7 weist einen umlaufenden Flansch 19 auf, der den Stützelementfuß 18 umgreift und verhindert, daß das Stützelement 3 aus dem Zubringerelement 7 ohne weiteres herausgezogen werden kann.

Das Stützelement 3 und das Zubringerelement 7 begrenzen ein Ölvolumen 20, das, wie aus Fig. 1 ohne weiteres zu erkennen ist, relativ klein gehalten werden kann.

Die Biegeausgleichswalze 1 arbeitet wie folgt:

Es wird zunächst angenommen, daß auf den Walzenmantel 2 keine äußeren Kräfte wirken. Ein derartiger Fall tritt beispielsweise auf, wenn die Biegeausgleichswalze als Endwalze in einem Kalander eingebaut ist und die Nips des Kalanders geöffnet sind. In diesem Fall liegt der Walzenmantel 2 lediglich mit seinem Eigengewicht auf dem Stützelement 3 auf. Das Zubringerelement 7 kann dabei praktisch bis zum Anschlag in die Hülse 8 und damit den Träger 4 eingefahren werden. Der Öldruckkanal 13 ist nicht unter Druck gesetzt, so daß sich das Zubringerelement 7 in radialer Richtung (bezogen auf den Träger 4) frei bewegen kann. Die Tellerfeder 17 ist leicht vorgespannt oder, wenn der Walzenmantel gar nicht auf dem Stützelement 3 aufliegt, ungespannt. Das Stützelement 3 liegt in diesem Fall mit seinem Stützelementfuß 18 von unten am Flansch 19 an.

Zur Inbetriebnahme der Biegeausgleichswalze 1, beispielsweise zum Schließen der Nips des Kalanders, wird über die Versorgungsleitung 11 Hydraulikflüssigkeit unter Druck zugeführt, so daß der Druck im Raum 9 ansteigt. Der Druck pflanzt sich durch die Drosselanordnung 15 und die Taschendrosseln 6 bis in die Drucktaschen 5 fort. Aufgrund der Drosselanordnung 15 ist der Druck im Druckraum 9 aber noch so groß, daß das Zubringerelement 7 aus dem Träger 4 herausgefahren wird. Wenn das Stützelement 3 am Walzenmantel 2 anliegt, dann wird die Tellerfeder 17 komprimiert, um Differenzkräfte aufzunehmen. Durch den sich einstellenden Federweg verschiebt sich das Zubringerelement 7 relativ zum Stützelement 3, so daß der Stützelementfuß 18 vom Flansch 19 freikommt. Das Stützelement 3 hat nun nur noch über die Tellerfeder 17 Kontakt zum Zubringerelement 7, wenn man von einem Kontakt über eine Dichtung 21 absieht, die das Ölvolumen 20 nach außen abdichtet.

Nachdem der Druckaufbau abgeschlossen ist, wird das Zubringerelement 7 dadurch in der Hülse 8 fixiert, daß der Öldruckkanal 13 unter Druck gesetzt wird. Somit ist gewährleistet, daß bei einer Schwingbewegung des Walzenmantels 2 gegenüber dem Träger 4 das Stützelement 3 gegenüber dem Zubringerelement 7 bewegt werden kann. Bei dieser Schwingungsbewegung wird das im Ölvolumen 20 eingeschlossene Öl durch die Drosselanordnung 15 hin- und hergeschoben. Da die Tellerfeder 17 im Verhältnis zur übertragenen hydraulischen Kraft des Stützelements 3 relativ weich ist, wird die Dämpfungseigenschaft des Stützelements 3 dadurch nicht merklich negativ beeinflußt.

Das Ölvolumen 20 kann durch das Herausfahren des Zubringerelements 7 aus dem Träger 4 minimiert werden, so daß man mit einer hohen Sicherheit auch bei hohen Frequenzen davon ausgehen kann, daß eine ausreichende Ölmenge bei einer Schwingungsbewegung durch die Drosselanordnung 15 hindurchbewegt wird. Die dazu notwendige Energie wird der Schwingungsenergie entzogen.

Fig. 2 zeigt eine abgewandelte Ausgestaltung einer Biegeausgleichswalze 1, bei der gleiche und einander entsprechende Elemente mit den gleichen Bezugszeichen versehen sind.

Ein wesentlicher Unterschied besteht darin, daß sich die Wand 14 nunmehr an der Stirnseite des Zubringerelements 7 befindet. Der Stützelementfuß 18 umgreift nun den Flansch 19 am Zubringerelement 7 radial außen. Dadurch ändern sich die Verhältnisse der Flächen geringfügig, auf die die entsprechenden Öldrücke wirken. Das Funktionsprinzip der Biegeausgleichswalze 1 bleibt aber gleich. Das Ölvolumen 20 kann minimiert werden, so daß man mit großer Zuverlässigkeit dafür sorgen kann, daß bei einer Schwingung des Walzenmantels 2 gegenüber dem Träger 4 immer eine ausreichende Menge an Öl durch die Drosselanordnung 15 hin- und herbewegt wird, um der Schwingung Energie zu entziehen.

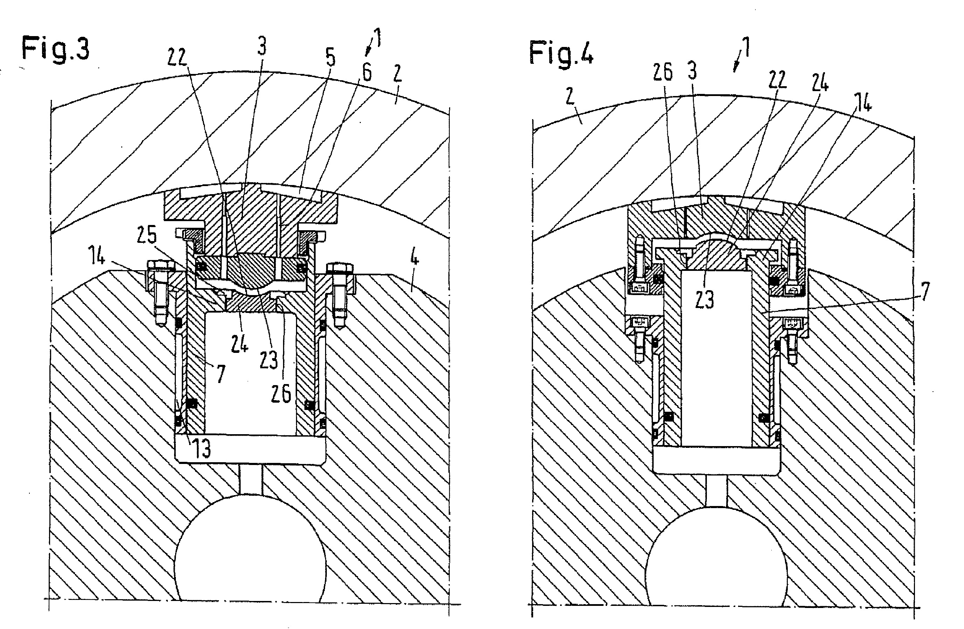

Fig. 3 zeigt eine Ausgestaltung ähnlich zu der der Fig. 1. Gleiche und einander entsprechende Elemente sind daher mit den gleichen Bezugszeichen versehen.

Zwischen der Zubringerhülse 7 und dem Stützelement 3 ist in diesem Fall keine Feder vorgesehen. Es ist also möglich, daß die Zubringerhülse 7 und das Stützelement 3 in Hartlage in Kontakt kommen.

Aus diesem Grunde weist die Biegeausgleichswalze 1 eine gewölbte Anschlagflächenanordnung auf, die eine konkav gewölbte Anschlagfläche 22 am Zubringerelement 7 und eine entgegengesetzt, d.h. konvex gewölbte Anschlagfläche 23 am Stützelement 3 aufweist. Die Wölbungen passen zusammen. Sie sind als Abschnitte einer Kugeloberfläche ausgebildet, so daß auch bei einer Hartlage des Stützelements 3 am Zubringerelement 7 das Stützelement 3 gegenüber dem Zubringerelement 7 etwas Kippen kann.

Die konkave Anschlagfläche 22 ist in einem Anschlagflächeneinsatz 24 angeordnet, der mit mehreren radial vorstehenden Armen 25 auf der Wand 14 der Zubringerhülse 7 aufliegt. Zwischen dem Anschlagflächeneinsatz 24 und der Wand 14 ist ein Spalt 26 gebildet, der so dimensioniert ist, daß er die Drosselanordnung 15 bildet.

Bei einer derartigen Ausbildung der Biegeausgleichswalze 1 ist es zweckmäßig, beim Druckaufbau mindestens einen Haltepunkt einzufügen, bei dem das Klemmen der Zubringerhülse 7 stattfindet. Die einzelnen Bewegungsabläufe gehen dann zweckmäßigerweise folgendermaßen vonstatten:

Um eine bestimmte Streckenlast einzustellen, wird beim Druckaufbau ein Haltepunkt bei einer vorbestimmten Streckenlast eingefügt, der beispielsweise 80 % der vorbestimmten Streckenlast entspricht. Aufgrund des herrschenden Kräftegleichgewichts liegt das Stützelement 3 zu diesem Zeitpunkt an dem Anschlagflächeneinsatz 24 des Zubringerelements 7 an. Zu diesem Zeitpunkt erfolgt nun das Klemmen des Zubringerelements 7 am Joch 4, so daß das Zubringerelement 7 nicht mehr weiter bewegt werden kann. Danach wird die Streckenlast auf 100 % erhöht. Dabei biegt sich der Träger 4 weiter durch, was zum Lösen des Stützelements 3 vom Zubringerelement 7 führt. Durch die schrittweise Steigerung der Durchbiegung des Trägers 4 entsteht das notwendige Spiel, welches zur freien Bewegung des Stützelements 3 gegenüber dem Träger 4 notwendig ist.

Da in der Regel die Durchbiegung des Trägers 4 an seinen axialen Enden wesentlich kleiner ist als in der axialen Mitte, kann es notwendig sein, mehrere Haltepunkte beim Druckaufbau einzufügen. In diesem Fall werden beispielsweise beim ersten Haltepunkt die Zubringerelemente 7, die axial weiter außen liegen, festgeklemmt und bei einem späteren Haltepunkt die Zubringerelemente 7 in der axialen Mitte. Dies schafft dann über die Arbeitsbreite des Walzenmantels 2 einen annähernd gleichen Freiraum zur Bewegung der Stützelemente 3 bei dynamischer Belastung, also bei einer Schwingung.

Fig. 4 zeigt eine Ausgestaltung ähnlich zu der nach Fig. 3. Gleiche und einander entsprechende Elemente sind daher mit den gleichen Bezugszeichen versehen.

Ein erster Unterschied besteht darin, daß die Wölbungen der beiden Anschlagflächen 22, 23 vertauscht sind, d.h. die dem Zubringerelement 7 zugeordnete Anschlagfläche 22 ist konvex gewölbt und die dem Stützelement 3 zugeordnete Anschlagfläche 23 ist konkav gewölbt.

Darüber hinaus umgreift das Stützelement 3 das Zubringerelement 7, bildet also eine Art "Hut", während das Stützelement 3 bei der Ausgestaltung nach Fig. 3 eine Art "Pilz" bildet.

Auch bei der Ausgestaltung nach Fig. 4 ist die Anschlagfläche 22 in einem Anschlagflächeneinsatz 24 angeordnet, der mit der Wand 14 des Zubringerelements 7 einen Spalt 26 bildet, der letztendlich die Drosselanordnung bildet.

Die Betriebsweise der Ausgestaltung nach Fig. 4 entspricht der der nach Fig. 3.

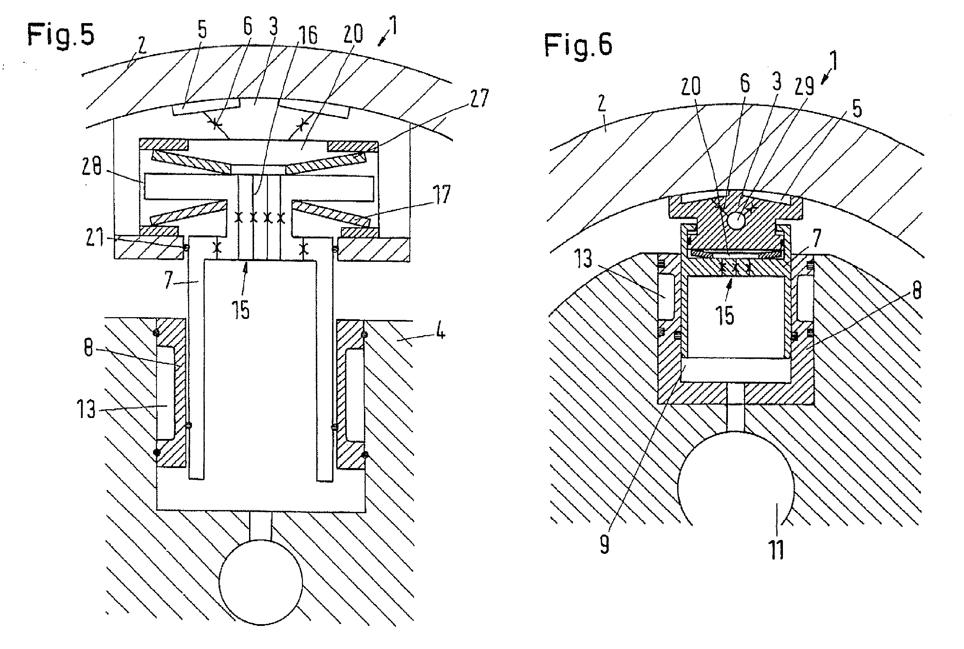

Fig. 5 zeigt eine Ausgestaltung, die zusätzlich zu der Ausgestaltung nach Fig. 2 eine weitere Tellerfeder 27 aufweist. Die Tellerfeder 17 wirkt einer Bewegung von Stützelement 3 und Zubringerelement 7 aufeinander zu entgegen. Sie wird deswegen auch als "Ausfahrfeder" bezeichnet, weil sich diese Bewegung ergibt, wenn das Zubringerelement 7 in Richtung auf den Walzenmantel 2 ausgefahren wird und das Stützelement 3 bereits zur Anlage an den Walzenmantel 2 gekommen ist.

Im Gegensatz dazu wird die Tellerfeder 27 als "Einfahrfeder" bezeichnet, weil sie einer Bewegung entgegenwirkt, die sich ergibt, wenn das Zubringerelement 7 in den Träger 4 eingefahren wird und das Stützelement 3 bereits am Träger 4 anliegt.

Die Verwendung der Einfahrfeder 27 gewährleistet, daß auch bei geringen Drücken kein direkter "harter" Kontakt des Stützelements 3 zum Zubringerelement 7 bestehen kann.

Wird das Stützelement 3, wie in den Fig. 2 und 5 dargestellt, als "Hut"-Stützelement ausgebildet, so kann die wirksame Druckeinsatzfläche des Stützelements 3 gleich groß gemacht werden wie die hydraulisch wirksame Fläche des Zubringerelements 7. In diesem Fall wirkt nur die sich an der Drosselanordnung 15 einstellende Druckdifferenz als druckabhängige Spannkraft der Federn 17 bzw. 17 und 27. Das Stützelement 3 kann also zwischen relativ weichen Federn 17, 27 verspannt werden. Die verspannten Federn 17, 27 dienen dann hauptsächlich dazu, die bewegungsabhängigen Reibungskräfte der Dichtungen 21 aufzunehmen, ohne daß eine Hartlage zwischen Stützelement 3 und Zubringerelement 7 entstehen kann.

Bei dieser Ausgestaltung kann in das Stützelement 3 eine weitere Dämpfungsdrossel 28 integriert werden, über die das intern pulsierende Öl in Dämpfungsarbeit umgesetzt wird. Damit ist die dynamisch wirkende Fläche des Stützelements 3 größer als die statisch wirkende hydraulische Fläche des Stützelements 3 selbst. Dies steigert das Dämpfungsvermögen des Stützelements 3.

Fig. 6 zeigt eine sechste Ausgestaltung, die bis auf den nachfolgend erläuterten Unterschied im wesentlichen der Ausgestaltung nach Fig. 1 entspricht.

Der Raum 9 ist, wie bei der Ausgestaltung nach Fig. 1 auch, mit der Versorgungsleitung 11 verbunden.

Die Drucktaschen 5 stehen hingegen mit einer eigenen Flüssigkeitsversorgung 29 in Verbindung und zwar über die Taschendrosseln 6. Da das aus den Drucktaschen 5 abströmende Öl wieder aufgefangen und zur erneuten Druckbeaufschlagung der Drucktaschen 5 verwendet wird, ist davon auszugehen, daß in dieses Öl Luft eingetragen wird.

Wenn man nun die Flüssigkeitsversorgung 29 von der Versorgungsleitung 11 trennt, kann man dafür sorgen, daß der Raum 9 mit einem praktisch luftfreien Öl gefüllt wird, so daß sich dieses luftfreie Öl auch im Ölvolumen 20 befindet. Damit wird die Kompressibilität des ohnehin kleinen Ölvolumens 20 weiter vermindert.

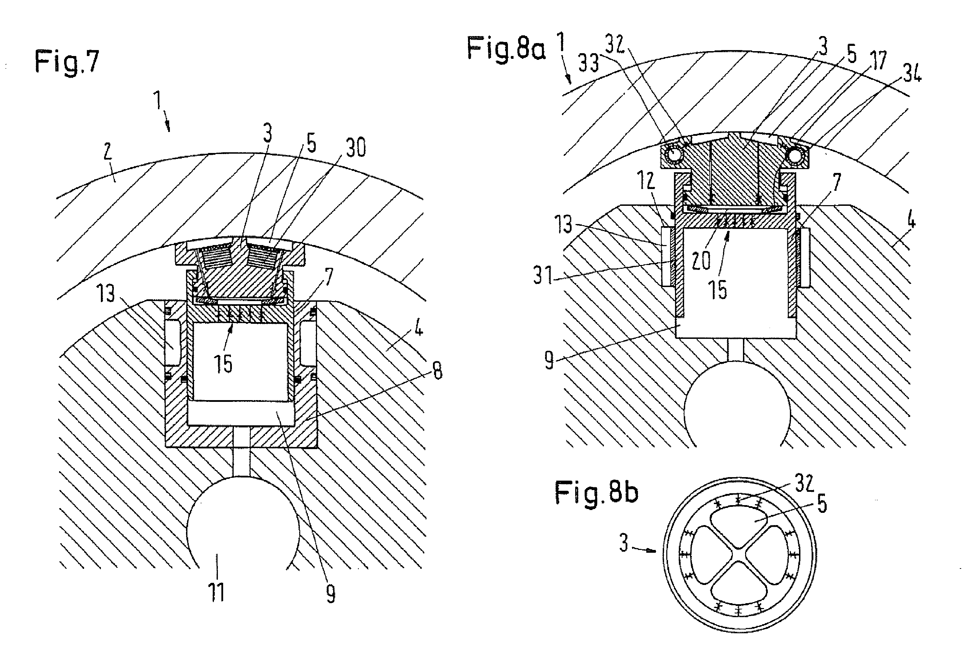

Fig. 7 zeigt eine Ausgestaltung, die im wesentlichen der von Fig. 1 entspricht. Dementsprechend sind gleiche und einander entsprechende Elemente mit den gleichen Bezugszeichen versehen.

Das Stützelement 3 ist hier als "aktives" Stützelement ausgebildet, d.h. die Drucktaschen 5 werden auch durch eine Piezoelementanordnung 30 begrenzt. Mit Hilfe der Piezoelementanordnung 30 ist es möglich, kleinere Volumenänderungen in der Drucktasche 5 zu bewirken. Damit kann ebenfalls einem Schwingen des Walzenmantels 2 entgegengewirkt werden, wenn die Schwingung des Walzenmantels 2 erfaßt und diese Schwingung auf die Piezoelementanordnung 30 zurückgeführt wird.

Die Ausgestaltung nach Fig. 8 zeigt eine achte Ausgestaltung der Biegeausgleichswalze 1, bei der gleiche und einander entsprechende Elemente mit den gleichen Bezugszeichen versehen sind.

In diesem Fall ist der Öldruckkanal 13 durch eine den Raum 9 umgebende Nut im Träger 4 gebildet. Der Öldruckkanal 13 ist zum Zubringerelement 7 hin durch eine Hülse 31 begrenzt, die in der Nut 12 angeordnet ist und durch den Träger 4 festgehalten ist. Wenn der Öldruckkanal 13 unter einen entsprechenden Druck gesetzt wird, dann wird die Hülse 31 komprimiert und hält dann das Zubringerelement 7 fest.

Ein zweiter Unterschied besteht darin, daß die Drucktaschen 5 über Hilfsdrosseln 32 mit einem Druckspeicher 33 verbunden sind. Der Druckspeicher 33 ist im Stützelement 3 angeordnet. Er ist gebildet durch einen Schlauch 34, der in das Stützelement 3 eingelegt ist und von innen mit dem Druck aus den Drucktaschen 5 und von außen mit einem anderen Druck beaufschlagt ist.

Die in den einzelnen Ausführungsbeispielen dargestellten Einzelmerkmale können beliebig miteinander kombiniert werden mit Ausnahme der Tatsache, daß ein Hut-Stützelement ein Hut-Stützelement bleibt und entsprechend ein Pilz-Stützelement ein Pilz-Stützelement bleibt.

## Patentansprüche

1. Biegeausgleichswalze mit einem umlaufenden Walzenmantel und einem Träger, auf dem der Walzenmantel mit mindestens einem Stützelement abgestützt ist, das vom Druck in einem Druckraum beaufschlagt ist, der über eine Drosselanordnung mit einer Versorgungsleitung in Verbindung steht und von der Drosselanordnung einerseits und dem Stützelement andererseits begrenzt ist, **dadurch gekennzeichnet, daß** die Drosselanordnung (15) gegenüber dem Träger (4) bewegbar ist, wobei eine Halteeinrichtung (8, 31) vorgesehen ist, mit der die Drosselanordnung (15) im Träger (4) festlegbar ist.

2. Walze nach Anspruch 1, **dadurch gekennzeichnet, daß** die Drosselanordnung (15) in einem Zubringerelement (7) angeordnet ist, das im Träger (4) geführt ist.

3. Walze nach Anspruch 2, **dadurch gekennzeichnet, daß** das Zubringerelement (7) eine Führung für das Stützelement (3) bildet.

4. Walze nach Anspruch 2 oder 3, **dadurch gekennzeichnet, daß** das Zubringerelement (7) als Rohr ausgebildet ist, das mit einer den Querschnitt des Rohres verschließenden Wand (14) versehen ist, in der die Drosselanordnung (15) angeordnet ist.

5. Walze nach einem der Ansprüche 2 bis 4, **dadurch gekennzeichnet, daß** zwischen dem Zubringerelement (7) und dem Stützelement (3) eine Federanordnung (17, 27) angeordnet ist.

6. Walze nach Anspruch 5, **dadurch gekennzeichnet, daß** die Federanordnung (17, 27) mindestens eine Ausfahrfeder (17) aufweist, die einer Bewegung des Zubringerelements (7) gegen das am Walzenmantel (2) anliegende Stützelement (3) entgegenwirkt.

7. Walze nach Anspruch 5 oder 6, **dadurch gekennzeichnet, daß** die Federanordnung (17, 27) mindestens eine Einfahrfeder (27) aufweist, deren Wirkung einer Bewegung des Zubringerelements (7) in Richtung auf den Träger (4) entgegengesetzt gerichtet ist.

8. Walze nach einem der Ansprüche 5 bis 7, **dadurch gekennzeichnet, daß** die Federanordnung (17, 27) mindestens eine Tellerfeder aufweist.

9. Walze nach einem der Ansprüche 2 bis 8, **dadurch gekennzeichnet, daß** zwischen dem Zubringerelement (7) und dem Stützelement (3) eine gewölbte Anschlagflächenanordnung (22, 23) vorgesehen ist.

10. Walze nach Anspruch 9, **dadurch gekennzeichnet, daß** das Zubringerelement (7) einen Anschlagflächeneinsatz (24) aufweist.

11. Walze nach Anspruch 10, **dadurch gekennzeichnet, daß** zwischen dem Zubringerelement (7) und dem Anschlagflächeneinsatz (24) ein Drosselspalt (26) ausgebildet ist.

12. Walze nach einem der Ansprüche 1 bis 11, **dadurch gekennzeichnet, daß** die Halteeinrichtung (8, 31) als Klemmeinrichtung ausgebildet ist.

13. Walze nach Anspruch 12, **dadurch gekennzeichnet, daß** die Klemmeinrichtung (8, 31) hydraulisch betätigbar ist.

14. Walze nach Anspruch 13, **dadurch gekennzeichnet, daß** die Klemmeinrichtung (8, 31) eine das Zubringerelement (7) umgebende Hülse (8, 31) aufweist, deren Umfang einen Öldruckkanal (13) begrenzt.

15. Walze nach einem der Ansprüche 1 bis 14, **dadurch gekennzeichnet, daß** das Stützelement (3) mindestens eine Drucktasche (5) aufweist, deren Flüssigkeitsversorgung (29) von der Versorgungsleitung (11) getrennt ist.

16. Walze nach einem der Ansprüche 1 bis 15, **dadurch gekennzeichnet, daß** das Stützelement (3) mindestens eine Drucktasche (5) aufweist, deren Volumen durch eine Piezoelementanordnung (30) veränderbar ist.

17. Walze nach einem der Ansprüche 1 bis 16, **dadurch gekennzeichnet, daß** das Stützelement (3) mindestens eine Drucktasche (5) aufweist, die über eine Drosseleinrichtung (32) mit einem Druckspeicher (33) in Verbindung steht.

18. Verfahren zum Betreiben einer Biegeausgleichswalze mit einem umlaufenden Walzenmantel und einem Träger, bei dem man mindestens ein Stützelement durch eine Drosselanordnung hindurch mit einem Druck beaufschlagt und damit den Walzenmantel gegenüber dem Träger abstützt, **dadurch gekennzeichnet, daß** man die Drosselanordnung gegenüber dem Träger verlagert und in einer Halteposition festhält.

19. Verfahren nach Anspruch 18, **dadurch gekennzeichnet, daß** man bei einem Walzenanlauf die Drosselanordnung gemeinsam mit dem Stützelement verlagert.

20. Verfahren nach Anspruch 19, **dadurch gekennzeichnet, daß** man nach dem Festhalten der Drosselanordnung den auf das Stützelement wirkenden Druck weiter erhöht.
